# EUROPEAN PATENT APPLICATION

(11) **EP 4 759 718 A1**
(43) Date of publication of application: **17.06.2026**
(21) Application number: 25220239.5
(22) Date of filing: 02.12.2025
(51) Int. Cl.: B64D 37/00, B01F 23/451, B60K 15/01, B60K 15/03, B64D 37/02, F02M 25/00, B64D 37/20, B64D 37/34

(54) **FUEL MIXING ASSEMBLY**

(30) Priority: 13.12.2024 GB 202418354
(71) Applicant: Airbus Operations Limited, Bristol BS34 7PA (GB)
(72) Inventor: EDWARDS, Henry, Bristol, BS34 7PA (GB)
(74) Representative: Abel & Imray LLP

(57) **Abstract**

A fuel mixing assembly comprising, a fuel vessel, such as a pipe 15 for conveying flow of a first fuel; and a second-fuel conduit 17 for conveying flow of, for example an additive, into the fuel vessel 15. The fuel mixing assembly further comprises a vortex generator 21, the vortex generator 21 being configured to generate vortices to mix the first fuel and the additive. The additive may be released from an outlet in the vortex generator 21.

## Description

### BACKGROUND OF THE INVENTION

The present disclosure relates to a fuel mixing assembly, an aircraft fuel distribution system, and an aircraft incorporating such a system. The present disclosure also relates to a method of mixing a second fuel, which may be an additive, into aircraft fuel.

It is known to add additives into aviation fuel. For example, it is well known for additives to be added in bulk as part of the process of producing the fuel at the refinery. These additives may, for example, include lubricant enhancers, corrosion inhibitors and static dissipators. The fuel is then supplied pre-mixed with those additives in the fuel, for direct supply to an aircraft.

In some circumstances it may be desirable to introduce additives to a fuel at a later stage (for example after receiving the fuel from the supplier). This is particularly the case where additives are used, for example, to manage to address the compatibility of equipment with new fuels.

In the above-mentioned scenarios, it is known for ground staff to manually introduce additives to the fuel prior to it being loaded into the aircraft. However, this manual dosing of the fuel can be prone to errors, for example the introduction of the incorrect dose of additive. If such an error occurs, the aircraft may require corrective actions before returning to operation, which can be costly and inconvenient.

On-board mixing of fuels is also known. In these arrangements, a second fuel (for example a specific type of fuel such as a sustainable fuel, a fuel with pre-mixed additive or an additive in isolation) is introduced into the first fuel, within the aircraft fuel system. An example of such an arrangement is disclosed in GB2630393.

In arrangements in which the additive is introduced within the aircraft fuel system, it may be challenging to fully mix the additive into the fuel prior to it reaching the engine. Alternatively or additionally, the means by which the additive is introduced may give rise to a relatively large pressure drop. This tends to mean that a relatively high supply pressure is required for the main fuel supply.

The present invention seeks to mitigate one or more of the above-mentioned problems. Alternatively or additionally, the present invention seeks to provide an improved fuel mixing assembly.

### SUMMARY OF THE INVENTION

According to a first aspect of the invention, there is provided a fuel mixing assembly according to a fuel mixing assembly comprising: a fuel vessel for conveying flow of a first fuel; and a second-fuel conduit for conveying flow of a second fuel into the fuel vessel. The second-fuel conduit is configured to allow introduction of the second fuel into the first fuel at a second-fuel outlet port. The fuel mixing assembly may further comprise a vortex generator, the vortex generator being configured to generate vortices in the fluid within the fuel vessel, such that the generated vortices mix the first fuel and the second fuel downstream of the second-fuel outlet port.

The provision of the vortex generator in the fuel mixing assembly may facilitate the mixing of the first fuel and the second fuel because the vortices may help to entrain and/or dissipate the second fuel into the first fuel.

The first fuel is a fluid fuel. The first fuel is preferably a liquid fuel. The first fuel is preferably for mixing with air for subsequent combustion, for example in an engine such as a gas turbine engine. The first fuel may be a hydro-carbon fuel, for example a hydro-carbon aviation fuel.

The second fuel is preferably a liquid fuel. The second fuel may be a different type of fuel to the first fuel. For example, the second fuel may be a sustainable fuel such as a bio-fuel. In some embodiments, the second fuel may comprise, or may be, an additive. The additive may be configured to improve the characteristics of the first fuel. It will be appreciated that an additive may be considered a 'second fuel' in the context of the present disclosure, regardless of whether the additive itself releases energy during combustion of the fuel-additive mix. In embodiments in which the second fuel is an additive, the volume of the additive added to the first fuel may result in a concentration of at least 0.01vol%, at least 0.025vol%, at least 0.05vol%, at least 0.1vol%, at least 0.5vol% at least 1vol%, at least 5vol%, and at least 10vol% additive within the first fuel. In some embodiments, the additive added to the first fuel may result in a concentration of no more than 0.5vol%, or no more than 1vol%, or no more than 5vol%, or no more than 10vol% additive within the first fuel.

In some embodiments, the fuel vessel may, for example, be a fuel tank such that the mixing of the first and second fuels takes place within the tank itself. In preferred embodiments, the fuel vessel is a conduit, and more preferably a pipe. The pipe may be for conveying flow of the first fuel towards, or away from, a fuel tank (for example an aircraft fuel tank). Thus the mixing assembly may be configured to mix the first and second fuels during filling of the tank (for example during refuelling) or as the fuel is moved from the fuel tank towards the engine for combustion.

The fuel mixing assembly may be arranged such that the second fuel is entrained into the first fuel. The second fuel may be entrained by virtue of a motive flow of the first fuel past the second-fuel outlet port. Such an arrangement has been found to be especially beneficial because it does not require active supply of the second fuel (for example using a pump), and instead requires minimal moving parts.

In some embodiments, the vortex generator may be arranged to create a low pressure region in the flow of the first fuel (for example the low pressure region may be the core of a vortex generated by the vortex generator). The second-fuel outlet port may be arranged such that the second fuel is entrained into the low pressure region. For example, the outlet may be located downstream of the vortex generator, in the region that the vortex core is expected to develop during flow of the first fuel.

In preferred embodiments, the second-fuel outlet port may be located in the vortex generator. The vortex generator may be configured such that, in use, fluid flow past the vortex generator exhibits a high pressure region and a low pressure region. The second-fuel outlet port may be arranged in the low pressure region, such that the second fuel is entrained into the fluid flow of fuel moving past the outlet port. Such an arrangement may be beneficial because it may enable the second fuel to be entrained into the fluid flow, whilst only creating a relatively localised pressure drop. This may enable the supply of the first fuel to be provided a relatively low pressure, or at a higher pressure but with a correspondingly increased flow rate.

The vortex generator is preferably a fixed structure. For example, the vortex generator may be a structure fixed to, but protruding from, the inner surface of a pipe.

The fuel mixing assembly may comprise a control valve for controlling flow of the second fuel to the second-fuel outlet. The vortex generator may comprise the control valve. The control valve may be coupled to a controller, for example a controller in the aircraft avionics system.

The assembly may comprise a plurality of vortex generators. Each vortex generator may have any or all of the features described above in respect of the other vortex generator. For example, the assembly may comprise a plurality of vortex generators, each of those vortex generators having a corresponding second-fuel outlet. By way of another example, a plurality of the other vortex generators may purely function as vortex generators without having a second-fuel outlet.

The assembly may comprise a third-fuel conduit for conveying fluid flow of a third fuel. In embodiments of the invention comprising a plurality of vortex generators, one of the vortex generators may comprise the second-fuel outlet and one of the vortex generators may comprise an outlet for the third fuel.

According to a second aspect of the invention there is also provided a fuel mixing assembly comprising: a main fuel pipe for conveying fuel (for example aviation fuel) to, or from, an aircraft fuel tank; an ancillary pipe for conveying a second fuel, more preferably an additive, to be added into the aviation fuel; and a vortex generator arranged to induce vortices into fluid flow within the main pipe. The ancillary pipe extends through the vortex generator and emerges at an outlet on the vortex generator, and the outlet is arranged such that it is located in a low-pressure region of the fluid flow past the vortex generator, such that the second fuel, more preferably the additive, is entrained into the fuel as the fuel flows past the vortex generator, and such that the vortices subsequently mix the second fuel/additive into the fuel.

According to a further aspect of the invention there is also provided an aircraft fuel distribution system comprising the fuel mixing assembly of other aspects of the invention.

According to yet another aspect of the invention, there is provided an aircraft comprising the aircraft fuel distribution system of the above-mentioned aspect. The aircraft may comprise an engine, for example a gas turbine engine, arranged to receive the first fuel mixed with the second fuel.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

According to a further aspect of the invention there is provided a method of mixing a second fuel into a first fuel on an aircraft. The method may comprise the steps of: (a) introducing a second fuel into a flow of a first fuel within a vessel, such as a conduit, and (b) generating vortices in the flow of the first fuel and the second fuel in the conduit, such that the vortices contribute to the downstream mixing of the second fuel into the first fuel. In the method, the vortices may be generated by a vortex generator. The vortices may be generated at the same location that the second fuel is introduced into the flow of the first fuel.

It will of course be appreciated that features described in relation to one aspect of the present invention may be incorporated into other aspects of the present invention. For example, the method of the invention may incorporate any of the features described with reference to any aspect of the apparatus of the invention and *vice versa.*

### DESCRIPTION OF THE DRAWINGS

Embodiments of the present invention will now be described by way of example only with reference to the accompanying schematic drawings of which:
- Figure 1: shows an aircraft with a fuel distribution system incorporating a fuel mixing assembly according to a first embodiment of the invention;
- Figure 2: shows a schematic of part of the fuel mixing assembly of Figure 1;
- Figure 3: shows detail of the vortex generator in the fuel mixing assembly of Figure 2;
- Figure 4: shows internal detail of a control valve in the vortex generator in Figure 3;
- Figure 5: shows a perspective view of a vortex generator in a fuel mixing assembly of a second embodiment of the invention;
- Figure 6: shows a plan view of the vortex generator of Figure 5;
- Figure 7: shows part of a fuel mixing assembly according to a third embodiment of the invention;
- Figure 8: shows part of a fuel mixing assembly according to a fourth embodiment of the invention;
- Figure 9: shows part of a fuel mixing assembly according to a fifth embodiment of the invention;
- Figure 10: shows a downstream part of the fuel mixing assembly of Figure 9; and
- Figure 11: is a flowchart showing a method of mixing the fuels in the arrangement of Figures 9 and 10.

### DETAILED DESCRIPTION

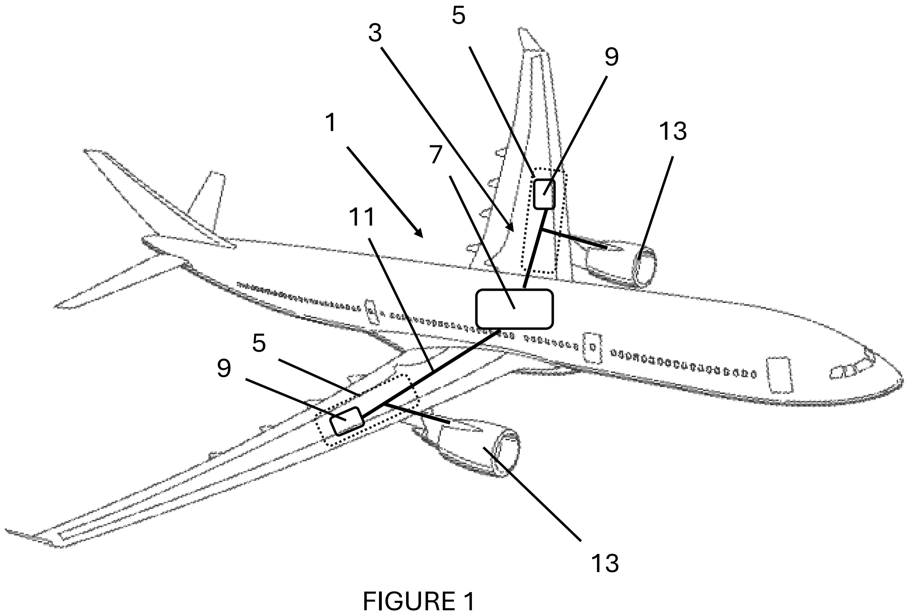

Figure 1 shows an aircraft 1 with a fuel distribution system 3 incorporating two fuel mixing assemblies 5 (demarked by dotted lines) according to a first embodiment of the invention. The fuel distribution system 3 comprises a main fuel tank 7 and two additive tanks 9. The main fuel tank 7 contains aviation fuel and is connected to a fuel pipe network 11 leading to the gas turbine engines 13. The additive tanks 9 are each connected into this pipe network 11 at the fuel mixing assembly 5 in each wing. The fuel mixing assembly 5 is arranged to mix the additive into the fuel to enhance the fuel properties prior to combustion of the fuel-additive mix in the engine 13. One of these fuel mixing assemblies 5 is described in detail below, but it will be appreciated that the other mixing assembly in the aircraft in Figure 1 is substantially identical.

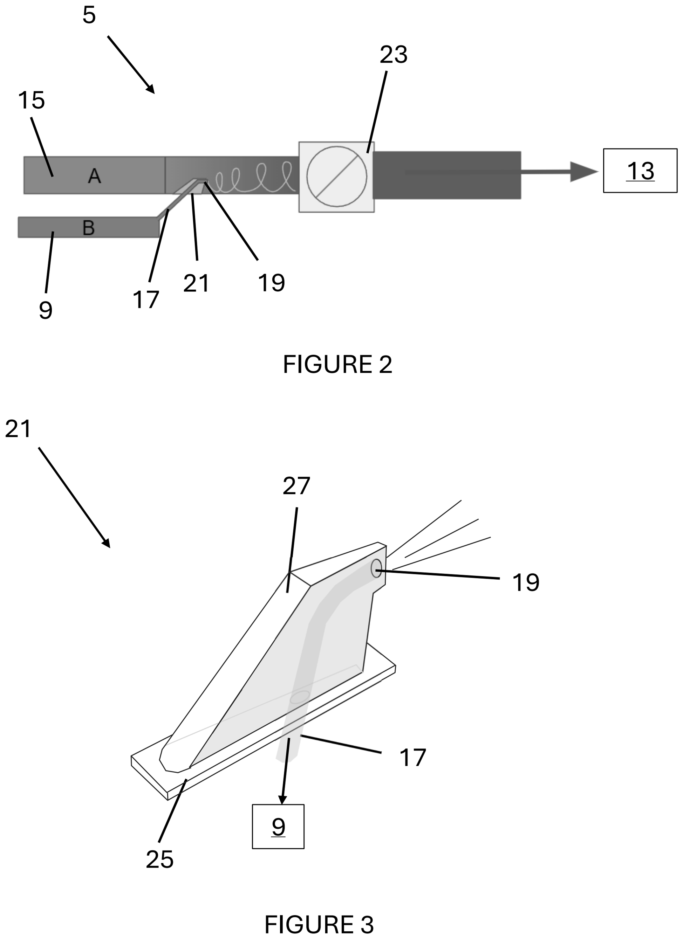

Referring now to Figure 2, the fuel mixing assembly 5 comprises a main fuel supply pipe 15 (part of the pipe network 11 of Figure 1) for conveying the aviation fuel towards the engine 13. The mixing assembly 5 also comprises an additive supply pipe 17 for conveying the additive (contained in the additive tank 9) to an outlet port 19. The additive supply pipe 17 extends through a vortex generator 21 (described below in more detail with reference to Figure 3) to allow the additive to be introduced to the fuel flow in the main pipe 15. A low pressure shut off valve 23 is located downstream of the vortex generator 21 to control flow of the fuel-additive mix to the engine 13.

Figure 3 illustrates the vortex generator 21 in more detail. The vortex generator 21 is attached to the inner wall of the pipe 15 via a base flange 25. From the base flange 25, an aerofoil-shaped element 27 extends upwardly into the fluid flow. As is known in vortex generators *per se,* the aerofoil element 27 is shaped, and angled to the direction of the fluid pipe flow, to promote the creation and shedding of vortices, as the fluid flows past the vortex generator 21.

In the first embodiment of the invention, the additive supply pipe 17 extends within the body of the vortex generator and terminates at the outlet port 19 located towards the rear of the vortex generator 21. The location of this outlet port 19 is chosen such that it is positioned in a region of low-pressure flow around the vortex generator 21. As a result of the relatively low pressure in the flow of the fuel past the vortex generator 21 at this location, the additive is entrained into the flow of fuel as it passes the outlet 19. Furthermore, the additive is then efficiently distributed in the downstream turbulent flow created by the vortices shed from the vortex generator 21.

The arrangement in the first embodiment of the invention has been found to be especially beneficial. Firstly, the arrangement allows the passive introduction of the additive into the fuel, i.e. without the need for a pump or other moving parts. Secondly, the vortices also have the beneficial function of efficiently mixing the additive into the fuel once it has been entrained, thereby ensuring a uniform distribution of the additive within the fuel. Thirdly, the use of a vortex generator has been found to facilitate such an arrangement without creating a large pressure loss in the pipe flow.

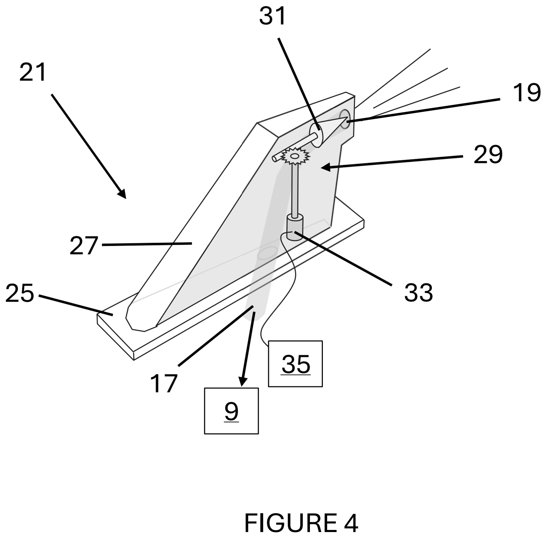

Figure 4 shows some further detail of the vortex generator 21 of Figure 3. Specially, Figure 4 illustrates the control valve 29 associated with the outlet port 19. The control value 29 comprises a needle valve head 31 coupled to an actuator 33. The actuator 33 is arranged to effect translation of the needle valve head 31 in/out of the outlet port 19, thereby controlling the flow rate of the additive entrained into the fuel flow. The control valve 29 is coupled to a controller 35 associated with the aircraft avionics (not shown). The controller 35 ensures that the additive is introduced in a volume such that there is a concentration of no more than 0.5vol% of the additive within the first fuel.

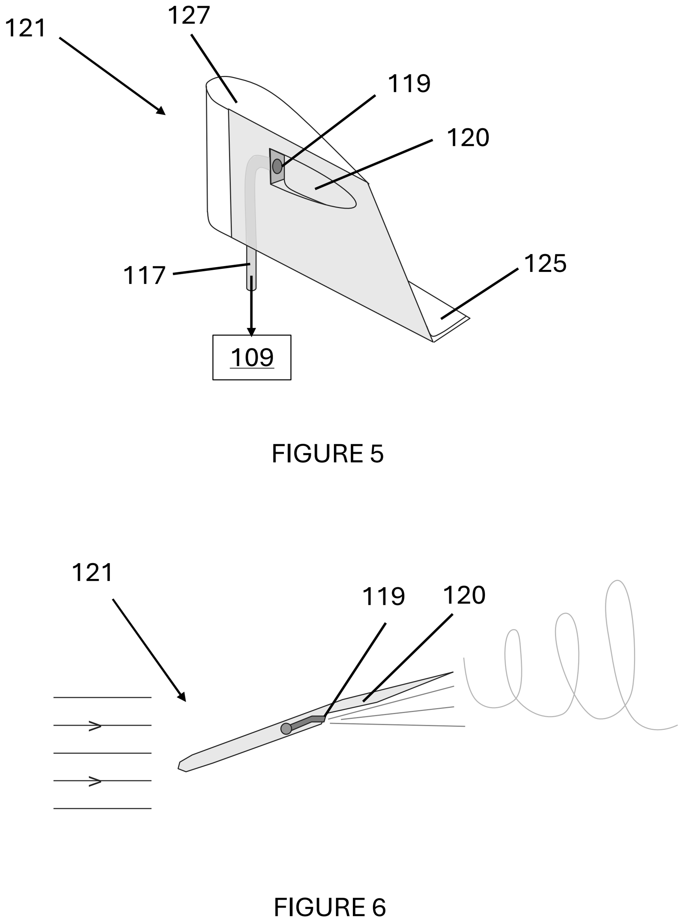

Figure 5 shows a perspective view of a vortex generator 121 in a fuel mixing assembly of a second embodiment of the invention, and Figure 6 shows a plan view of the vortex generator 121 of Figure 5. The second embodiment is similar to the first embodiment except that the vortex generator 121 is of an alternative design as described below. In the second embodiment, the additive pipe outlet port 119 is on the low pressure side of the vortex generator 121 (effectively the lower surface of the aerofoil shape) and is located in a rebate 120 in the aerofoil surface. As a result of the outlet 119 being located in this low pressure region, the additive is readily entrained into the fuel flow without the need to introduce the additive using active components such as a pump. This arrangement is also schematically illustrated in Figure 6. Figure 6 also illustrates how the additive is subsequently carried into the vortex and mixed into the fuel. Such an arrangement therefore enables effective entraining and mixing of the additive.

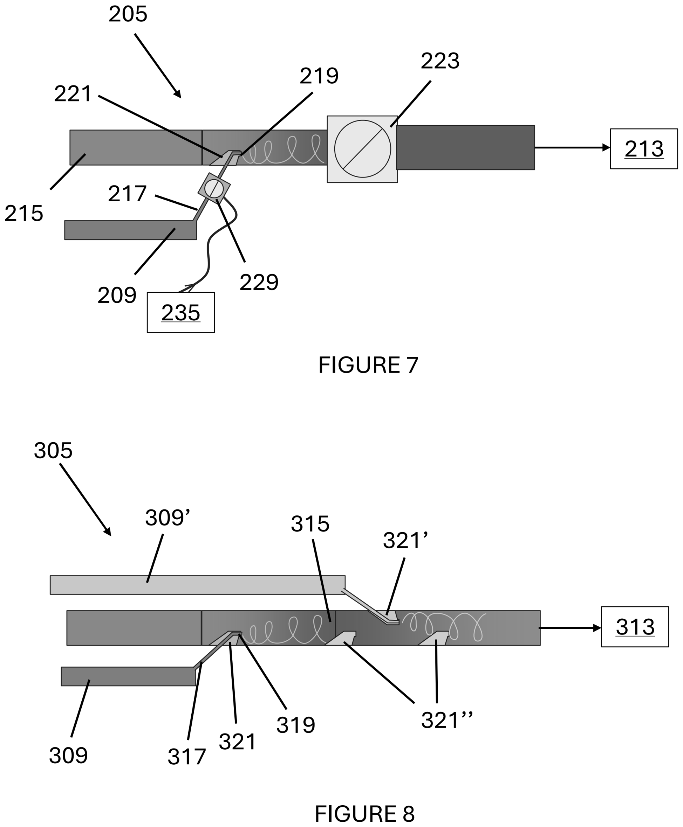

Figure 7 shows part of a fuel mixing assembly 205 according to a third embodiment of the invention. This arrangement is similar to the first embodiment except that the control valve 229 is instead located upstream of the vortex generator 221 and is located within the additive supply pipe 217. Features that correspond to those in the first embodiment are correspondingly labelled in Figure 7 but with the reference numeral incremented by 200.

Figure 8 shows part of a fuel mixing assembly 305 according to a fourth embodiment of the invention. This embodiment is similar to the first embodiment of Figures 1-4 but also contains a further additive supply tank 309' arranged to introduce a second additive into the main fuel pipe 315. The second additive is introduced in a similar fashion to the first additive, but is further downstream and is introduced in a position at which the first additive is relatively uniformly distributed. The arrangement in the fourth embodiment, also comprises two additional vortex generators 321" that do not have an associated additive supply. Instead, the vortex generators 321 " purely acts to create vortices for the purposes of facilitating the mixing of the downstream flow.

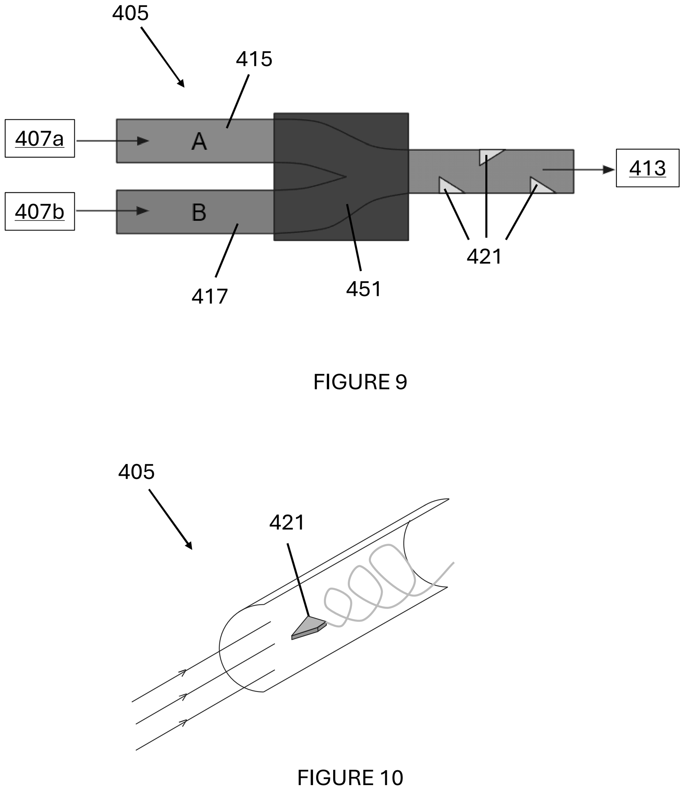

Figure 9 and 10 show yet another embodiment of the invention. In this embodiment, the aircraft (now shown) has two fuel tanks 407a, 407b, each for containing two different fuels, namely a hydro-carbon based aviation fuel and a sustainable bio-fuel. The fuel mixing assembly 405 is configured to mix these two fuels together. Accordingly, the fuel mixing assembly 405 comprises a first fuel pipe 415 for transporting the hydro-carbon based fuel and a second fuel pipe 417 for transporting the bio-fuel. Both these pipes meet at a bifurcation 451. Downstream of the bifurcation 451, the inner walls of the pipe include a multiplicity of vortex generators 421. These vortex generators 421 are configured to generate vortices in the fluid passing along the pipe (that fluid being a partially mixed combination of the two fuels), such that the generated vortices further mix the two fuels together. The mixing action of one of the vortex generators 421 is illustrated schematically in Figure 10. Such an arrangement has been found to provide a simple arrangement that enables improved fuel mixing on-board the aircraft.

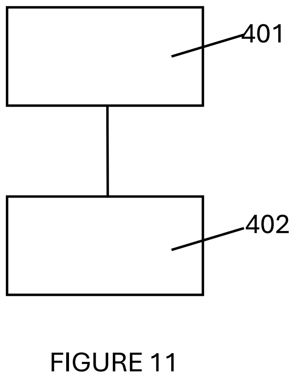

Figure 11 is a flowchart showing a method of mixing fuels using the arrangement of Figures 9 and 10. The method comprises the first step 401 of introducing the bio-fuel into the flow of the hydro-carbon aviation fuel within the pipe 415. The second step 402 comprises generating vortices in the flow of the hydro-carbon and bio-fuels. The vortex generators 421 are positioned such that the vortices contribute to the downstream mixing of the two fuels.

Whilst the present invention has been described and illustrated with reference to particular embodiments, it will be appreciated by those of ordinary skill in the art that the invention lends itself to many different variations not specifically illustrated herein. For example, the arrangement in Figures 9 and 10 may be provided with different fuels and/or additives (for example there may be a first fuel mixture and a second fuel mixture, the two mixtures having different properties/additives pre-mixed within them). The vortex generators in the embodiments of the invention may take a number of design forms, so long as they function as vortex generators and enable vortices to be generated within the fluid flow.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A fuel mixing assembly comprising:
a fuel vessel for conveying flow of a first fuel; and
a second-fuel conduit for conveying flow of a second fuel into the fuel vessel, the second-fuel conduit being configured to allow introduction of the second fuel into the first fuel at a second-fuel outlet port;
wherein the fuel mixing assembly further comprises a vortex generator, the vortex generator being configured to generate vortices in the fluid within the fuel vessel, such that the generated vortices mix the first fuel and the second fuel downstream of the second-fuel outlet port.

2. A fuel mixing assembly according to claim 1, wherein the fuel vessel is a fuel pipe for conveying flow of the first fuel towards, or away from, an aircraft fuel tank.

3. A fuel mixing assembly according to claim 1 or claim 2, wherein the second-fuel outlet port is located within the vortex generator.

4. A fuel mixing assembly according to claim 3, wherein the vortex generator is configured such that, in use, the flow of the first fuel past the vortex generator exhibits a high pressure region and a low pressure region, and wherein the second-fuel outlet port is arranged in the low pressure region, such that the second fuel is entrained into the flow of the first fuel moving past the second-fuel outlet port.

5. A fuel mixing assembly according to claim 3 or claim 4, wherein the vortex generator comprises a control valve for controlling flow of the second fuel to the second-fuel outlet port.

6. A fuel mixing assembly according to any preceding claim, wherein the second fuel is an additive.

7. A fuel mixing assembly comprising:
a main fuel pipe for conveying aviation fuel to, or from, an aircraft fuel tank;
an ancillary pipe for conveying an additive to be added into the aviation fuel; and
a vortex generator arranged to induce vortices into fluid flow within the main pipe, wherein
the ancillary pipe extends through the vortex generator and emerges at an outlet on the vortex generator,
and wherein the outlet is arranged such that it is located in a low-pressure region of the fluid flow past the vortex generator, such that the additive is entrained into the aviation fuel as the aviation fuel flows past the vortex generator, and such that the vortices subsequently mix the additive into the aviation fuel.

8. An aircraft fuel distribution system comprising the fuel mixing assembly according to any preceding claim.

9. An aircraft comprising the fuel distribution system according to claim 8, wherein the aircraft comprises an engine arranged to receive the first fuel mixed with the second fuel.

10. A method of mixing a second fuel into a first fuel onboard an aircraft, the method comprising the steps of:
(a) introducing a second fuel into a flow of a first fuel within a vessel, such as a conduit, and
(b) generating vortices in the flow of the first fuel and the second fuel in the conduit, such that the vortices contribute to the downstream mixing of the second fuel into the first fuel.

11. A method according to claim 10, wherein the vortices are generated by a vortex generator, at the same location that the second fuel is introduced into the flow of the first fuel.
